# EUROPEAN PATENT SPECIFICATION

(11) **EP 2 611 507 B1**
(45) Date of publication and mention of the grant of the patent: **23.01.2019**
(21) Application number: 11752629.3
(22) Date of filing: 02.09.2011
(51) Int. Cl.: A63B 65/12, A63B 59/20

(54) **SPORTS APPARATUS**
SPORTGERÄT
ÉQUIPEMENT DE SPORT

(30) Priority: 02.09.2010 GB 201014570
(43) Date of publication of application: 10.07.2013
(73) Proprietor: Funslinger Limited, South Yorkshire DN3 3QG (GB)
(72) Inventor: BUTTERFIELD, Roderick Adam, Doncaster, South Yorkshire DN4 6TA (GB); BUTTERFIELD, John Daniel, Doncaster, South Yorkshire DN3 3QG (GB)
(74) Representative: HGF Limited
(86) International application number: PCT/GB2011/051648
(87) International publication number: WO 2012/028886

(56) References cited:
- CA-A1- 2 157 693
- US-A- 4 145 050
- US-A- 6 066 056
- US-A- 6 076 829
- US-A1- 2005 143 202
- US-A1- 2006 183 575
- US-B1- 7 665 453

## Description

This invention relates to a sports apparatus, and more specifically to a sports apparatus for throwing and catching a projectile, including but not limited to a ball.

### BACKGROUND

Throwing and catching games have existed for many years in several forms. In its simplest form, a game of throw and catch requires nothing more than a projectile, such as a ball, and the players manually throw and catch the ball between themselves using their hands.

However, by using equipment, the nature and style of the game changes. In US 5,224,703 (Cap Toys, Inc.), for example, an elasticated net is attached to a frame so that the net can be used to both propel a ball (by stretching and releasing the net) and catch a ball. Therefore, when using equipment, the range, accuracy and speed of the propelled ball are not the same as they would be if the ball were simply thrown and caught using one's hands. Also, the addition of a net makes catching easier thereby making the game more attractive to children and those with poorer hand-eye coordination. Consequently, the traditional game of throw and catch is different and interesting when played in a different way.

A second example of apparatus for playing a throwing and catching game is described in US-B-7,476,166 (Yearick). In Yearick, the equipment comprises a net supported by a frame where the frame has a hook attached at a top end. The equipment is designed to be used with a ball having an elastic band attached thereto so that a player can connect the elastic band to the hook, pull the ball relative to the hook to stretch the elastic band, and release the ball so that it travels on a trajectory, propelled by the release of elastic energy in the stretched elastic band. The net can be used to catch a ball thrown by another player using elastic propulsion. Yearick therefore provides an apparatus for playing another variant of throw and catch.
CA-2157693 (Manu Alexander) describes a hand held device used for catching an object, such as a ball, where the device comprises a paddle portion having an aperture therein and a handle extending from the paddle portion. The ball may be releasably caught in the aperture such that the ball may be caught and thrown from the aperture of the device.US-A-6066056 (Morrow David) describes a lacrosse head that has ball retaining ridges extend along the interior surface of the sidewalls and serve to direct and retain the
ball within the ball pocket.

US-A-2006/183575 (Montano Ben) also describes a lacrosse-stick head. On a rear side the head includes projections to facilitate the picking up of a ball from the ground.
US-A-2005/143202 (Orlowski Boguslaw) describes a game apparatus for catching and throwing a projectile. The apparatus includes a handle, and a basket attached to the handle for catching and throwing the projectile. The basket includes spaced apart, string-like retaining members configured to yield sufficiently to allow the projectile to pass between them when the projectile is received during a catch, and further configured to retain the projectile after the catch.
US-A-4145050 (Sullivan Richard) describes a device for catching and throwing a disc-shaped object comprising a basket for catching the disc-shaped object, the basket including a longitudinal channel at the bottom of the basket and in open communication therewith, the channel having a restraining track therein for releasably securing a disc-shaped object. Attached to the basket and in open communication therewith is a narrow, elongated, arcuate channel, diminishing in height toward its distal end, the channel including a guideway on both of the inner walls of the channel near the upper end thereof for guiding a disc-shaped object having a central axis. The device also includes a handle for grasping the basket to catch and throw a disc-shaped object. The device also includes a magnet at the distal end of the channel for picking up a magnetic disc-shaped object. US-B-4665453 (D Agostino Robert D) describes a game device adapted for use by a player to launch a disc or projectile. The holder has a pivot member with a rest position and a release position. The pivot member is biased to its rest position so as to at least partially retain the projectile in readiness for launching. A handle is attached to the holder for grasping by the player so as to launch the projectile.

It is an object of the present invention to provide an alternative sports apparatus for throwing and catching a projectile, including but not limited to a ball.

### BRIEF SUMMARY OF THE DISCLOSURE

In accordance with the present invention there is provided a sports apparatus for throwing and catching a projectile, according to claim 1.

The present invention therefore provides an alternative sports apparatus for throwing and catching a projectile offering a new and interesting game to users. The frame may be accelerated, for example, by swinging the sports apparatus in an arc-like motion, just as one might swing a tennis racquet. Therefore, no elasticated components are necessary to launch the ball providing an intuitive apparatus for throwing and catching a projectile.

The frame defines a loop and the catching means comprises a net attached to the frame around the loop, where the net is loose so as to define a volume capable of receiving a projectile. The loop and net arrangement provides an easy means for catching a fast moving projectile. Therefore, the game may be played at a greater speed compared to traditional (manual) throw and catch games, and removes the risk of injury to the hands when catching a fast moving projectile. Also, since the loop and net will generally be larger than an average hand, the sports apparatus of the present invention allows for easier catching which makes the throw and catch game more appealing to children and/or those with less hand-eye coordination.

In one preferable embodiment, the loop generally defines a plane and the throwing means is arranged on the frame to release a retained projectile upon acceleration of the frame in a throwing direction that is substantially perpendicular to the plane. In this embodiment, the user does not have to orient the sports apparatus differently (e.g. by rotating it) for throwing and catching actions.

In an alternative embodiment, the loop generally defines a plane and the throwing means is arranged on the frame to release a retained projectile upon acceleration of the frame in a throwing direction that is substantially parallel to the plane. In this embodiment, the sports apparatus is met with reduced air resistance during the throwing action when compared with other arrangements of throwing means relative to the frame.

The gripping component is a plurality of fingers extending away from the frame and defining a holding space therebetween for retaining a projectile. Preferably, the gripping component comprises four fingers arranged in pairs where each finger of each pair is arranged diametrically opposite to the other finger of the pair. In this embodiment, and general embodiments comprising fingers, a projectile may be gripped
between the fingers. In embodiments where the fingers are flexible, the gaps between the fingers provide space for the fingers to flex into and out of, thereby permitting relative movement of the fingers. One finger of each pair is preferably larger than the other finger of the pair. In this embodiment, the fingers are arranged so that a retained projectile is more inclined to be released from the gripping component in a particular direction thereby improving reliability and predictability of the throwing means.

The gripping component is preferably formed from a single piece of material thereby allowing low cost and convenient manufacture. In one preferable embodiment, the gripping component is attached to the frame via one or more support elements. The support elements can be used to position and orientate the gripping component on the frame in the desired direction, during manufacture. Preferably the gripping component comprises plastics material. Additionally or alternatively, the frame comprises plastics material. Plastics materials may be used to form the frame and/or gripping component as they can be non-toxic, light weight, low cost, durable and colourful.

Preferably, the gripping component is shaped so as to be capable of retaining a sphere-shaped projectile, a spheroid-shaped projectile or an ellipsoid-shaped projectile. Therefore, a given gripping component can be formed so as to be capable of releasably retaining ball-like projectiles and/or other non-spherical projectiles. A given gripping component may be capable of releasably retaining a wide variety of projectiles.

In one preferable embodiment, the gripping component is rigid and is arranged to partially surround and releasably grip and retain a flexible projectile therein. In this embodiment, the use of a soft flexible projectile minimizes the risk of players or spectators being injured, or property being damaged, by projectile in flight. In an alternative preferable embodiment the gripping component is flexible.

### BRIEF DESCRIPTION OF THE DRAWINGS

Embodiments of the invention are further described hereinafter with reference to the accompanying drawings, in which:
Figure 1 is a front view of a sports apparatus according to a first embodiment of the present invention;
Figure 2 is a side view of the sports apparatus of Figure 1;
Figure 3 is a perspective view of the sports apparatus of Figures 1 and 2;
Figure 4 is a detailed view of the catching means of the sports apparatus of Figures 1 to 3, where the net is not shown for clarity;
Figure 5A is an alternative view of the catching means of the sports apparatus of Figures 1 to 3, and each of Figures 5B and 5C show the catching means with an example projectile, where the net is not shown in any of Figures 5A to 5C for clarity;
Figure 6 is a perspective view of a sports apparatus according to a second embodiment of the present invention;
Figure 7 is a side view of the sports apparatus of Figure 6; and
Figure 8 is a front view of the sports apparatus of Figures 6 and 7.

### DETAILED DESCRIPTION

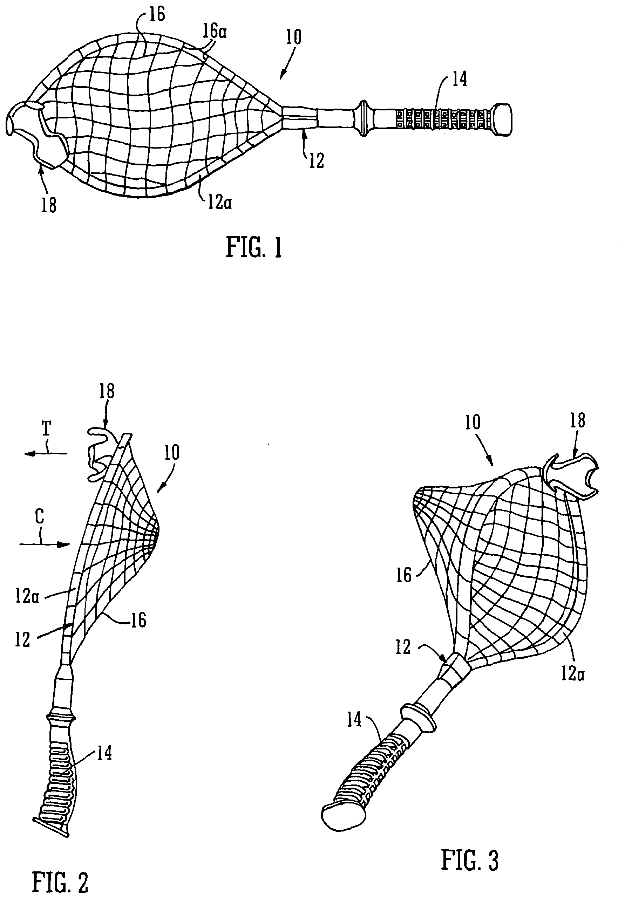

Figures 1 to 3 show a sports apparatus 10 according to a first embodiment of the present invention. The sports apparatus 10 comprises a frame 12 that has a handle 14 adapted to be gripped in the hand of a user (player). Part of the frame 12 is arranged in a loop 12a and a single net 16 is attached around the loop 12a of the frame 12 thereby closing the loop 12a. The net 16 is large enough so that it forms a loose fit across the loop 12a of the frame 12 and forms a pocket-like recess defining a volume in the apparatus 10 capable of receiving a projectile. The net 16 is affixed to the loop 12a of the frame 12 by a series of knots 16a in the fibers of the net 16. In alternative embodiments, the net 16 may be affixed to the frame 12 by other means, such as glue, or engagement of the net over lugs that may protrude inwardly from the loop 12a and which may be T-shaped. The net 16 forms a catching means capable of catching a projectile therein.

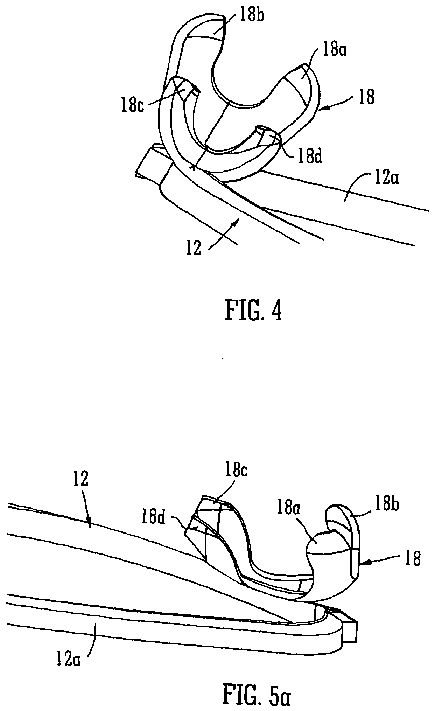

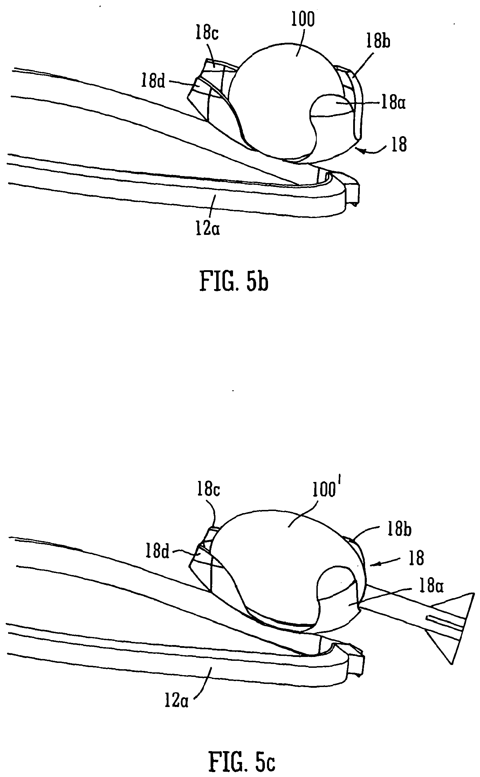

The frame 12 is also provided with a gripping component 18 that is arranged to partially surround and releasably grip a projectile therein. The gripping component 18, shown in more detail in Figures 4, 5A, 5B and 5C, comprises four fingers 18a,18b,18c,18d that extend away from the frame 12 at an end distal the handle 14. The fingers 18a-d are curved so as to create a cup-like configuration in combination and define a holding space therebetween for receiving a projectile. In the embodiment 10 shown in the Figures, the fingers 18a and 18b are larger than the fingers 18c and 18d. The fingers 18a-d are arranged in pairs where the fingers 18a and 18c form a pair and the fingers 18b and 18d form a pair. Finger 18a is arranged diametrically opposite finger 18c whereas finger 18b is arranged diametrically opposite finger 18d. Each finger has a width and a curved inner surface so that it is capable of contacting several points on the surface of a projectile and ensuring that the projectile is retained for a sufficient length of time before being released. That is, in the preferable embodiment shown in the Figures, the fingers are not thin spindle-like elements but are broader panel-like elements that extend away from the frame 12. Thin spindle-like elements may present an injury hazard to the player and others so the use of broader (and preferably curved) fingers minimizes the risk of injury. In the embodiment shown in the Figures, the fingers 18a-d are formed from a single sheet of material, such as plastics, that has been formed and/or cut into the shape shown in the Figures where each finger 18a-d extends away from the frame 12. In alternative embodiments, the fingers 18a-d may be separately formed, each extending from a part of the frame 12.

A suitably sized projectile may be inserted by the user into the gripping component 18 by pushing the projectile into the holding space between the fingers 18a-d. The fingers 18a-d may be flexible and flex outwards away from the holding space to allow the projectile into the holding space. Alternatively, the fingers 18a-d may be rigid and a suitably soft projectile may be used that can deform or flex so that it can be received in the holding space. In further alternative embodiments, both the fingers 18a-d and the projectile may be flexible that that each or either may flex to allow the projectile to be received in the holding space. In embodiments where the fingers 18a-d are flexible, once flexed outwards, the fingers 18a-d will be biased inwards, towards the holding space, and will act to (releasably) retain a projectile in the holding space. In embodiments where the projectile is soft, the projectile will need to deform or flex to be received in the holding space which may be sized so as to be smaller than the projectile in at least one direction. Once in the holding space, the deformed or flexed projectile will be biased outwardly (i.e. towards its original shape and configuration) and bear against the inside of the fingers 18a-d, thereby being retained within the holding space. In preferable embodiments, the projectile is soft so that the risk of players being injured by the projectile in flight is minimized.

The projectile will only be released from the gripping component 18 when the fingers 18a-d, or the projectile itself, flexes sufficiently for the projectile to pass out of the holding space. This may occur when the projectile undergoes a sufficient force relative to the fingers 18a-d which may be caused by relative acceleration between the projectile and the fingers 18a-d, such as when the apparatus is swung.

The arrangement of the fingers 18a-d is such that they are capable of retaining a variety of projectiles. Two examples of such projectiles are shown in Figures 5B and 5C. In Figure 5B, the gripping component 18 is retaining a spherical ball 100, such as a tennis ball, whereas in Figure 5C, the gripping component 18 is retaining a rocket-shaped projectile 100' comprising a non-spherical head and a tail having flights. The gripping component 18 retains the non-spherical head (which may be a spheroid, ellipsoid, or any other three-dimensional shape) of the projectile 100' while the tail extends away from the head between a gap between two adjacent fingers 18a,18b. In the embodiment shown in the Figures, the fingers 18a-d are arranged so that the projectile 100', or any similar projectile, can be arranged in the gripping component 18 with the tail protruding through any of the gaps between any two adjacent fingers 18a-d. Therefore, the player can quickly insert the projectile 100' into the gripping component 18 for throwing without much regard for the orientation, allowing quicker gameplay. Advantageously, the gripping component 18 shown in the Figures can be used to releasably retain a wide variety of projectiles including tennis balls and foam rocket-shaped projectiles.

The projectiles shown in Figures 5B and 5C are provided as examples only and are not limiting to the scope of the invention. Indeed, the gripping component 18 may releasably retain a wide variety of projectiles that may be arranged in the gripping component 18 in a variety of configurations.

In an intended use of the present invention, a player pushes a projectile into the gripping component 18 so that it is retained therein. Holding the handle 14, the player then swings the apparatus 10 in an arc-like motion, as one would swing a tennis racquet when serving. Whilst retained in the gripping component 18, the projectile will travel with the moving gripping component 18 along the arc path. When the relative forces between the projectile and the gripping component 18 are such that the projectile is no longer retained by the gripping component 18, the projectile will separate from the sports apparatus 10 and travel through the air along an independent trajectory. The gripping component 18 therefore forms a throwing apparatus arranged on the frame 12.

A second player, using a substantially identical sports apparatus 10, can then orient the frame 12 so that the traveling projectile passes through the loop 12a of the apparatus 10 and is caught in the net 16. The second player can then remove the projectile from their net 16 (by hand) and place it in the gripping component 18 of their apparatus 10. The second player may then throw the projectile back to the first player, or possibly to a third player, depending on the rules of the game being played, in the same way the first player threw the projectile towards the second player.

In the embodiment shown in Figures 1 to 5C, the gripping component 18 is arranged on the frame 12 so that a throwing direction T is substantially parallel to a (general) catching direction C of the apparatus (see Figure 2). That is, the throwing direction T is substantially perpendicular to a (general) plane defined by the loop 12a'. Of course, in play, the projectile may be caught in the net 16 when traveling along any direction that passes through the loop 12a'. This embodiment 10 has the advantage that a player may throw and catch a projectile without the requirement of changing the orientation of the apparatus 10 (e.g. rotating the apparatus after throwing).

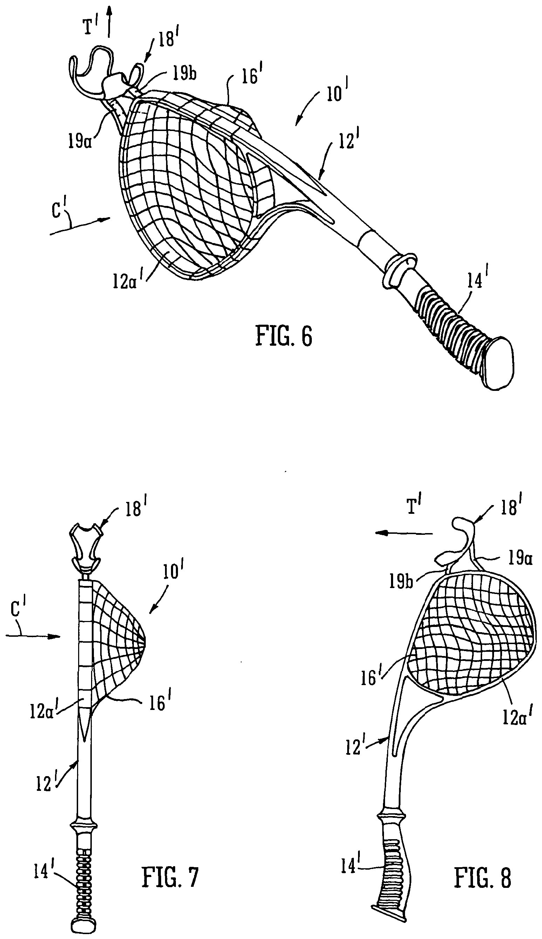

In a second embodiment 10' of the present invention, shown in Figures 6 to 8, the throwing direction T' and catching direction C' are not parallel to one another. Like numerals (with a prime) are used to denote features corresponding to those of the first embodiment of Figures 1 to 5C.

In Figure 6, the sports apparatus 10' comprises a frame 12' having a handle 14' adapted to be gripped by a player. The frame 12' extends away from the handle 14' and forms a loop 12a' and has a net 16' attached thereto to define the catching means. Like the first embodiment 10, the apparatus 10' of the second embodiment also comprises gripping component 18' arranged on the frame 12'. However, in the second embodiment 10', the gripping component 18' are attached to the frame 12' via two support elements 19a,19b and arranged so that a projectile may be thrown along a general throwing direction T' that is substantially perpendicular to the general catching direction C' (i.e. the direction substantially perpendicular to a plane defined by the loop 12a') of the apparatus 10'. Again, the projectile may be caught in the net 16' whilst traveling along any path that passes through the loop 12a'. This embodiment has the distinct advantage that the projectile may be thrown whilst moving the apparatus 10' along a path that minimizes the air resistance acting on the apparatus 10'.

With regards to the throwing means, the gripping component may comprise a number of fingers other than four; however it should be capable of partially surrounding and releasably gripping a projectile so that the projectile may be released from the gripping component when the apparatus is swung. However, the fingers should be arranged so that the projectile is sufficiently supported and is not prematurely released during the swing of the apparatus. For example, if two fingers were used, the fingers would need to be sufficiently broad so that the projectile is adequately held to allow the apparatus to be swung without inadvertently releasing the projectile too early. In preferable embodiments, the gripping component is disposed on the frame at an end opposite to the handle, however in alternative embodiments, the gripping component may be disposed at another location on the frame.

The sports apparatus of the present invention (according to any embodiment) may be used to play a game of throw and catch between two or more players, or alternatively, to play a possessive team game having two or more teams of players where the object may be to retain possession of the projectile and intercept the projectile in flight.

## Claims

1. A sports apparatus (10,10') for throwing and catching a projectile (100,100'), comprising:
a frame (12,12') having a handle (14,14');
catching means (16,16') arranged on the frame (12,12'); and
throwing means (18,18') arranged on the frame (12,12');
wherein the throwing means (18,18') comprises a gripping component that is arranged to partially surround and releasably grip and retain a projectile (100,100') therein, whereby a retained projectile (100,100') may be released from the throwing means (18,18') upon acceleration of the frame (12,12'), and
wherein the gripping component (18,18') is a plurality of fingers (18a,18b,18c,18d) extending away from the frame (12,12') and defining a holding space therebetween for retaining a projectile (100,100');
**characterised in that** the frame (12, 12') defines a loop (12a, 12a') and the catching means comprises a net (16, 16') attached to the frame (12, 12') around the loop (12a, 12a'), wherein the net (16, 16') is loose so as to define a volume capable of receiving a projectile (100, 100').

2. A sports apparatus (10') according to claim 1, wherein the loop (12a) generally defines a plane and the throwing means (18) is arranged on the frame (12) to release a retained projectile (100,100') upon acceleration of the frame (12) in a throwing direction (T) that is substantially perpendicular to the plane.

3. A sports apparatus (10') according to claim 1, wherein the loop (12a') generally defines a plane and the throwing means (18') is arranged on the frame (12') to release a retained projectile (100,100') upon acceleration of the frame (12') in a throwing direction (T') that is substantially parallel to the plane.

4. A sports apparatus (10,10') according to any preceding claim, wherein the gripping component (18,18') comprises four fingers (18a,18b,18c,18d) arranged in pairs (18a,18c;18b,18d) where each finger of each pair (18a,18c;18b,18d) is arranged diametrically opposite to the other finger of the pair (18a,18c;18b,18d).

5. A sports apparatus (10,10') according to claim 4, wherein one finger of each pair (18a,18c;18b,18d) is larger than the other finger of the pair (18a,18c;18b,18d).

6. A sports apparatus (10,10') according to any preceding claim, wherein the gripping component (18,18') is formed from a single piece of material.

7. A sports apparatus (10,10') according to any preceding claim, wherein the gripping component (18,18') is attached to the frame (12,12') via one or more support elements (19a,19b).

8. A sports apparatus (10,10') according to any preceding claim, wherein the gripping component (18,18') comprises plastics material.

9. A sports apparatus (10,10') according to any preceding claim, wherein the frame comprises plastics material.

10. A sports apparatus (10,10') according to any preceding claim, wherein the gripping component (18,18') is shaped so as to be capable of retaining a sphere-shaped projectile (100), a spheroid-shaped projectile or an ellipsoid-shaped projectile.

11. A sports apparatus (10,10') according to any preceding claim, wherein the gripping component (18,18') is rigid and is arranged to partially surround and releasably grip and retain a flexible projectile (100,100') therein.

12. A sports apparatus (10,10') according to any of claims 1 to 10, wherein the gripping component (18,18') is flexible.

13. A kit comprising two or more of the sport apparatus (10,10') according to any of claims 1 to 10, and a projectile (100,100').

14. A kit according to claim 13, wherein the projectile is a ball (100).

## Patentansprüche

1. Sportgerät (10, 10') zum Werfen und Fangen eines Wurfgeschosses (100, 100'), umfassend:
einen Rahmen (12, 12') mit einem Griff (14, 14');
ein Fangmittel (16, 16'), das an dem Rahmen (12, 12') angeordnet ist; und
ein Wurfmittel (18, 18'), das an dem Rahmen (12, 12') angeordnet ist;
wobei das Wurfmittel (18, 18') eine Greifkomponente umfasst, die so angeordnet ist, dass sie ein Wurfgeschoss (100, 100') teilweise umgibt und dieses lösbar greift und darin zurückhält, wobei ein zurückgehaltenes Wurfgeschoss (100, 100') durch Beschleunigung des Rahmens (12, 12') von dem Wurfmittel (18, 18') gelöst werden kann; und
wobei es sich bei der Greifkomponente (18, 18') um mehrere Finger (18a, 18b, 18c, 18d) handelt, die sich von dem Rahmen (12, 12') weg erstrecken und dazwischen einen Halteraum zum Zurückhalten eines Wurfgeschosses (100, 100') definieren;
**dadurch gekennzeichnet, dass** der Rahmen (12, 12') eine Schlinge (12, 12') definiert, und wobei das Fangmittel ein Netz (16, 16') umfasst, das um die Schlinge (12a, 12a') an dem Rahmen (12, 12') angebracht ist, wobei das Netz (16, 16') locker ist, so dass es ein Volumen definiert, das ein Wurfgeschoss (100, 100') aufnehmen kann.

2. Sportgerät (10') nach Anspruch 1, wobei die Schlinge (12a) allgemein eine Ebene definiert, und wobei das Wurfmittel (18) an dem Rahmen (12) so angeordnet ist, dass es ein zurückgehaltenes Wurfgeschoss (100, 100') bei Beschleunigung des Rahmens (12) in eine Wurfrichtung (T) freigibt, die im Wesentlichen senkrecht zu der Ebene ist.

3. Sportgerät (10') nach Anspruch 1, wobei die Schlinge (12a') allgemein eine Ebene definiert, und wobei das Wurfmittel (18') an dem Rahmen (12') so angeordnet ist, dass es ein zurückgehaltenes Wurfgeschoss (100, 100') bei Beschleunigung des Rahmens (12') in eine Wurfrichtung (T') freigibt, die im Wesentlichen parallel zu der Ebene ist.

4. Sportgerät (10, 10') nach einem der vorstehenden Ansprüche wobei die Greifkomponente (18, 18') vier Finger (18a, 18b, 18c, 18d) umfasst, die paarweise (18a, 18c; 18b, 18d) angeordnet sind, wobei jeder Finger jedes Paars (18a, 18c; 18b, 18d) diametral entgegengesetzt zu dem anderen Finger des Paars (18a, 18c; 18b, 18d) angeordnet ist.

5. Sportgerät (10, 10') nach Anspruch 4, wobei ein Finger jedes Paars (18a, 18c; 18b, 18d) größer ist als der andere Finger des Paars (18a, 18c; 18b, 18d).

6. Sportgerät (10, 10') nach einem der vorstehenden Ansprüche, wobei die Greifkomponente (18, 18') aus einem Materialstück ausgebildet ist.

7. Sportgerät (10, 10') nach einem der vorstehenden Ansprüche, wobei die Greifkomponente (18, 18') über ein oder mehrere Stützelemente (19a, 19b) an dem Rahmen (12, 12') angebracht ist.

8. Sportgerät (10, 10') nach einem der vorstehenden Ansprüche, wobei die Greifkomponente (18, 18') Kunststoff umfasst.

9. Sportgerät (10, 10') nach einem der vorstehenden Ansprüche, wobei der Rahmen Kunststoff umfasst.

10. Sportgerät (10, 10') nach einem der vorstehenden Ansprüche, wobei die Greifkomponente (18, 18') so geformt ist, dass sie ein kugelförmiges Wurfgeschoss (100), ein Wurfgeschoss in Form eines Sphäroids oder ein ellipsoidförmiges Wurfgeschoss zurückhält.

11. Sportgerät (10, 10') nach einem der vorstehenden Ansprüche, wobei die Greifkomponente (18, 18') starr ist und so angeordnet ist, dass die ein flexibles Wurfgeschoss (100, 100') teilweise umgibt und lösbar greift und darin zurückhält.

12. Sportgerät (10, 10') nach einem der Ansprüche 1 bis 10, wobei die Greifkomponente (18, 18') flexibel ist.

13. Kit, umfassend zwei oder mehr des Sportgeräts (10, 10') nach einem der Ansprüche 1 bis 10 und ein Wurfgeschoss (100, 100').

14. Kit nach Anspruch 13, wobei das Wurfgeschoss ein Ball (100) ist.

## Revendications

1. Équipement de sport (10, 10') pour lancer et attraper un projectile (100, 100'), comprenant :
un cadre (12, 12') ayant une poignée (14, 14') ;
un moyen pour attraper (16, 16') disposé sur le cadre (12, 12') ; et
un moyen pour lancer (18, 18') disposé sur le cadre (12, 12') ;
le moyen pour lancer (18, 18') comprenant un composant de préhension qui est conçu pour entourer partiellement et saisir et retenir de manière amovible un projectile (100, 100') en son sein, de sorte qu'un projectile (100, 100') retenu puisse être libéré du moyen pour lancer (18, 18') lors de l'accélération du cadre (12, 12'), et
le composant de préhension (18, 18') étant une pluralité de doigts (18a, 18b, 18c, 18d) s'étendant à l'opposé du cadre (12, 12') et définissant un espace de maintien entre eux pour retenir un projectile (100, 100') ;
**caractérisé en ce que** le cadre (12, 12') définit une boucle (12a, 12a') et le moyen pour attraper comprend un filet (16, 16') fixé au cadre (12, 12') autour de la boucle (12a, 12a'), le filet (16, 16') étant lâche de sorte à définir un volume susceptible de recevoir un projectile (100, 100').

2. Équipement de sport (10') selon la revendication 1, la boucle (12a) définissant généralement un plan et le moyen pour lancer (18) étant disposé sur le cadre (12) pour libérer un projectile (100, 100') retenu lors de l'accélération du cadre (12) dans une direction de lancé (T) qui est sensiblement perpendiculaire au plan.

3. Équipement de sport (10') selon la revendication 1, la boucle (12a') définissant généralement un plan et le moyen pour lancer (18') étant disposé sur le cadre (12') pour libérer un projectile (100, 100') retenu lors de l'accélération du cadre (12') dans une direction de lancé (T') qui est sensiblement parallèle au plan.

4. Équipement de sport (10, 10') selon l'une quelconque des revendications précédentes, le composant de préhension (18, 18') comprenant quatre doigts (18a, 18b, 18c, 18d) disposés en paires (18a, 18c ; 18b, 18d), chaque doigt de chaque paire (18a, 18c ; 18b, 18d) étant disposé diamétralement opposé à l'autre doigt de la paire (18a, 18c ; 18b, 18d).

5. Équipement de sport (10, 10') selon la revendication 4, un doigt de chaque paire (18a, 18c ; 18b, 18d) étant plus grand que l'autre doigt de la paire (18a, 18c ; 18b, 18d).

6. Équipement de sport (10, 10') selon l'une quelconque des revendications précédentes, le composant de préhension (18, 18') étant formé d'une seule pièce de matériau.

7. Équipement de sport (10, 10') selon l'une quelconque des revendications précédentes, le composant de préhension (18, 18') étant fixé au cadre (12, 12') par l'intermédiaire d'au moins un élément de support (19a, 19b).

8. Équipement de sport (10, 10') selon l'une quelconque des revendications précédentes, le composant de préhension (18, 18') comprenant une matière plastique.

9. Équipement de sport (10, 10') selon l'une quelconque des revendications précédentes, le cadre comprenant une matière plastique.

10. Équipement de sport (10, 10') selon l'une quelconque des revendications précédentes, le composant de préhension (18, 18') étant formé de sorte à pouvoir retenir un projectile (100) sphérique, un projectile sphéroïde ou un projectile ellipsoïde.

11. Équipement de sport (10, 10') selon l'une quelconque des revendications précédentes, le composant de préhension (18, 18') étant rigide et conçu pour entourer partiellement et saisir et retenir de manière amovible un projectile flexible (100, 100') en son sein.

12. Équipement de sport (10, 10') selon l'une quelconque des revendications 1 à 10, **caractérisé en ce que** le composant de préhension (18, 18') est flexible.

13. Kit comprenant deux équipements de sport (10, 10') ou plus selon l'une quelconque des revendications 1 à 10 et un projectile (100, 100'),

14. Kit selon la revendication 13, le projectile étant une balle (100).
